# EUROPÄISCHE PATENTSCHRIFT

(11) **EP 3 275 774 B1**
(45) Veröffentlichungstag und Bekanntmachung des Hinweises auf die Patenterteilung: **01.05.2019**
(21) Anmeldenummer: 17170830.8
(22) Anmeldetag: 12.05.2017
(51) Int. Cl.: B62M 6/45, B62M 6/50, B60L 50/20, B62J 99/00

(54) **VERFAHREN UND VORRICHTUNG ZUR STEUERUNG EINER FAHRT ÜBER EINE BORDSTEINKANTE**
METHOD AND APPARATUS FOR CONTROLLING TRAVEL OVER A KERB EDGE
PROCÉDÉ ET DISPOSITIF DE COMMANDE D'UN PASSAGE D'UNE BORDURE DE TROTTOIR

(30) Priorität: 26.07.2016 DE 102016213691
(43) Veröffentlichungstag der Anmeldung: 31.01.2018
(73) Patentinhaber: Robert Bosch GmbH, 70442 Stuttgart (DE)
(72) Erfinder: Stegmaier, Juergen, 72074 Tuebingen (DE); Dasbach, Gregor, 72074 Tuebingen (DE); Dackermann, Tim, 72072 Tuebingen (DE); Greiner, Rinaldo, 72762 Reutlingen (DE); Baumgaertner, Daniel, 72070 Tuebingen (DE); Wienss, Andreas, 72800 Eningen Unter Achalm (DE)

(56) Entgegenhaltungen:
- DE-A1-102014 216 671
- DE-A1-102015 111 984

## Beschreibung

Die Erfindung betrifft ein Verfahren sowie eine Vorrichtung zur Steuerung eines Motors eines wenigstens teilweise elektrisch angetriebenen Zweirads sowie ein derartiges Zweirad.

### Stand der Technik

Sowohl auf der Fahrbahn befindliche Gegenstände als auch Bordsteine können für den ungeübten Fahrradfahrer eine nicht zu unterschätzende Gefahr darstellen. Zwar kann ein Überfahren des Gegenstands bzw. des Bordsteins folgenlos bleiben, jedoch besteht in jedem Fall eine Sturzgefahr.

Geübte Fahrradfahrer überwinden derartige Hindernisse, indem sie zu einem geeigneten Zeitpunkt das Vorderrad anheben oder sogar ganz darüber springen. Dies wird beispielsweise durch ein ziehen am Lenker realisiert oder durch einen Impuls nach unten, um den federnden Rückstoß eines Stoßdämpfers am Vorderrad zu nutzen. Diese Aktionen erfordern Kraft und Koordination vom Fahrer. Werden diese Techniken vom Fahrer nicht ausreichend beherrscht, kann es zu Unfällen kommen.

Die automatische Erkennung von Gegenständen bzw. Hindernissen auf der Fahrbahn wird beispielsweise in der nicht vorveröffentlichten DE 10 2016 200683 A1 beschrieben. Hierbei wird über die Erfassung des Zustands der Fahrbahn ein hinderliches Objekt erkannt und mittels einer Lampe beleuchtet, so dass der Fahrer gerade bei Nachtfahrten darauf aufmerksam gemacht wird.

### Offenbarung der Erfindung

Die vorliegende Erfindung beansprucht ein Verfahren zur Steuerung eines Motors eines wenigstens teilweise elektrisch antreibbaren Zweirads, eine Vorrichtung, die dieses Verfahren durchführt sowie ein Zweirad mit einer derartigen Vorrichtung.

Zunächst werden dabei die Daten einer Umfeldsensorik eingelesen, sofern die Umfeldsensorik nicht selbst Teil der erfindungsgemäßen Vorrichtung ist. Dabei kann es sich um eine Kamera, eine Ultraschallsensorik oder auch eine Radarsensorik handeln. Die Daten der Umfeldsensorik können als Rohdaten oder bereits ausgewertet verwendet werden, um ein Hindernis zu erkennen, welches sich auf der Fahrbahn oder zumindest im Bereich vor dem Zweirad befindet. Für die vorliegende Erfindung sind dabei nur diejenigen (erkannten) Hindernisse relevant, die sich im Bereich der Fahrt des Zweirads befinden. Hierzu wird wenigstens eine fahrdynamische Größe erfasst, die den Betrieb und somit den Fahrweg des Zweirads charakterisiert. Der Kern der Erfindung besteht dabei darin, dass in Abhängigkeit der Erkennung eines Hindernisses auf dem durch die wenigstens eine fahrdynamische Größe abgeleiteten prognostizierten Fahrweg eine Ansteuerung des Motors erfolgt, die zu einem erhöhten Vortrieb führt, z.B. einem höheren Drehmoment des Motors. Dieser erhöhte Vortrieb bzw. das erzeugte höhere Antriebsdrehmoment führt dazu, dass das Zweirad einen Antriebsimpuls erfährt, welcher bei dem üblicherweise bei Zweirädern, insbesondere bei Fahrrädern, vorliegenden erhöhten Massenschwerpunkt zu einer Entlastung bzw. bis zu einem Abheben des Vorderrads von der Fahrbahn führt. Durch das Entlasten und erst Recht durch das Abheben des Vorderrads lässt sich das Hindernis auch für ungeübte Fahrer leicht überwinden.

Als fahrdynamische Größen, die den Betrieb bzw. die Fahrt des Zweirads charakterisieren, kann eine Geschwindigkeit, eine Beschleunigung, eine Neigung und/oder eine Lenkrichtung des Zweirads mittels einer geeigneten Sensorik erfasst werden. Zusätzlich kann auch wenigstens eine Größe erfasst werden, die die Masse des Zweirads repräsentiert. Diese Massengröße hat indirekt ebenfalls Einfluss auf die Fahrdynamik, kann jedoch ebenfalls zur Berechnung des Massenschwerpunkts herangezogen werden. So kann der Massenschwerpunkt des Zweirads berechnet werden, z.B. indem ein Erfahrungswert angenommen wird oder ein entsprechenden Gewichtssensor verwendet wird, aus dem die Gesamtmasse abgeleitet werden kann. Weiterhin ist denkbar, Gewichtssensoren im Sattel und/oder am Gepäckträger zu verwenden, die Auskunft über die Masse und die Massenverteilung des Gesamtsystems aus Zweirad, Fahrer und Gepäck erlauben. Der so berechnete und/oder bestimmte Massenschwerpunkt des Zweirads oder des Systems aus Zweirad und Fahrer (evtl. inkl. Gepäck) kann im Folgenden bei der Ansteuerung des Motors verwendet werden, um einen geeigneten Vortrieb bzw. ein geeignetes Antriebsdrehmoment zu erzeugen.

Besonders vorteilhaft ist, wenn sich aus den Daten der Umfeldsensorik die Höhe bzw. Tiefe des Hindernisses ableiten lässt. Selbstverständlich kann vorgesehen sein, dass diese Information auch bereits in den Daten der Umfeldsensorik enthalten sind. Basierend auf der Höhe bzw. Tiefe des Hindernisses kann der vom Motor erzeugte Vortrieb bzw. dessen Drehmoment gesteuert werden. So kann beispielsweise vorgesehen sein, dass die gezielte erfindungsgemäße Ansteuerung nur dann erfolgt, wenn eine Mindesthöhe/-tiefe vorliegt, da nur in diesem Fall eine Unfallgefahr besteht. Optional oder alternativ kann auch vorgesehen sein, dass die Ansteuerung zum Ziel hat, das Vorderrad wenigstens um die (Mindest-)Höhe des Hindernisses anzugeben. Die Überprüfung, ob die Ansteuerung des Motors zu dieser Anhebung des Vorderrads geführt hat, kann in einer Weiterbildung der Erfindung auch mittels einer Regelschleife erfolgen, z.B. in dem die Anheben mittels eines Sensors überwacht wird. Denkbar sind hier neben Neigungssensoren auch Drehraten oder Beschleunigungssensoren, die die Drehung um den Massenschwerpunkt bzw. dem Aufsetzpunkt des Zweirads auf der Fahrbahn erfassen.

Besonders geeignet ist die vorliegenden Erfindung bei der Anfahrt auf Bordsteine, Randsteine, Verwerfungen auf der Fahrbahn oder auch Vertiefungen in der Fahrbahn wie Straßenbahnschienen. Bei letzteren kann die Erfindung dazu eingesetzt werden, nicht in die Schienen zu gelangen, um so einen Unfall zu verhindern.

Weiterhin kann die Steuerung derart auf das erkannte Hindernis abgestimmt werden, dass basierend auf der wenigstens einen fahrdynamischen Größe bzw. aus dem aus deren Größe abgeleiteten Fahrweg der zusätzliche Antriebsimpuls erst kurz vor dem potentiellen Auftreffen erzeugt wird, um eine weitestgehend effiziente Fahrt zu ermöglichen.

In einer Fortbildung der Erfindung kann vorgesehen sein, dass der Fahrer über die Erkennung eines Hindernisses auf dem prognostizierten Fahrweg informiert wird. Dies kann sowohl akustisch als auch optisch erfolgen. Denkbar ist ebenfalls, dass der Fahrer nur vor der Ansteuerung des Motors gewarnt wird, da das Zweirad in diesem Fall vermeintlich unkontrolliert einen Schub erzeugt, der nicht mit einer Trittaktivität des Fahrers korreliert ist.

Weitere Vorteile ergeben sich aus der nachfolgenden Beschreibung von Ausführungsbeispielen bzw. aus den abhängigen Patentansprüchen.

### Kurze Beschreibung der Zeichnungen

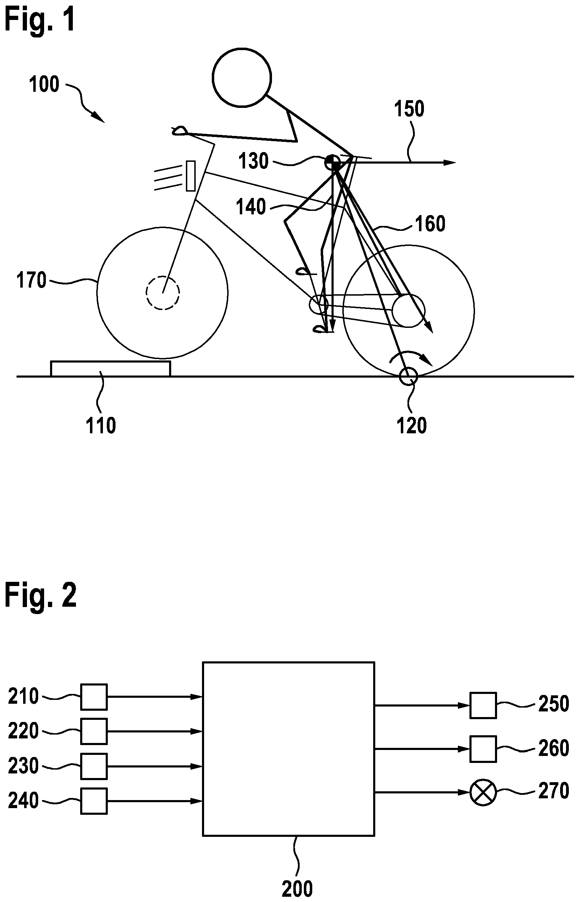

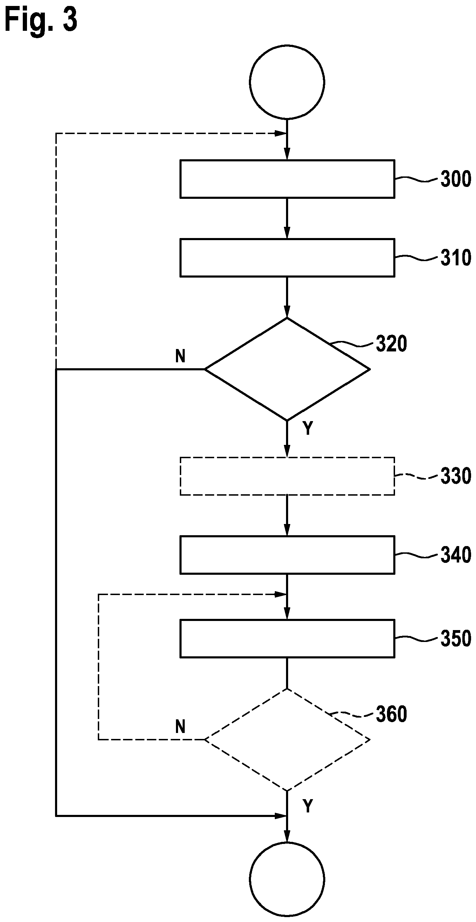

Die Figur 1 zeigt ein System bestehend aus Fahrrad und Fahrer mit den auf sie wirkenden Kräften beim Überfahren eines Bordsteins. In der Figur 2 wird eine erfindungsgemäße Vorrichtung beschrieben, mittels der ein Verfahren nach Figur 3 ausgeführt werden kann.

### Offenbarung der Erfindung

Wie eingangs bereits ausgeführt, bereitet es einigen ungeübten Zweiradfahrern, z.B. Radfahrern, Probleme, über Hindernisse auf der Fahrbahn hinweg zu kommen. Mit der vorliegenden Erfindung wird für diese Zweiradfahrer die Möglichkeit geschaffen, das Hindernis zu überwinden, ohne ausweichen zu müssen. Weiterhin verhindert die Erfindung auch die Beschädigung der Räder, z.B. bei der Überfahrt eines Bordsteins, indem rechtzeitig das Zweirad bzw. zumindest das Vorderrad entlastet oder über das Hindernis hinüber gehoben wird.

In der Figur 1 ist ein typisches Szenario des Überfahrens eines Bordsteins 110 durch ein Fahrrad 100 dargestellt. Um zu verhindern, dass das Vorderrad 170 am Bordstein 110 anstößt (eine ausreichende Höhe des Bordsteins vorausgesetzt) und somit den Fahrer des Fahrrads 100 zu Fall bringt, muss das Vorderrad 170 angehoben werden. Bei einer Bewegung des Fahrrads 130 greifen am Massenschwerpunkt 130, der sich bei einem Fahrrad üblicherweise relativ weit oben befindet, sowohl die Gewichtskraft 140 als auch die Trägheitskraft 150 an. Beide Kräfte resultieren in der Kraft 160, deren Aufstandspunkt 120 am Hinterrad den Drehpunkt der Aufwärtsbewegung darstellt. Wird daher das Fahrrad unterhalb des Massenschwerpunkts 130 beschleunigt, erfolgt eine Drehung um den Drehpunkt 120 und somit ein vorderes Aufbäumen mit einem Anheben des Vorderrads. Dieser Effekt beim Antrieb eines Fahrrads mit elektrischem Hilfsantrieb wird normalerweise durch die Ansteuerung vermieden, indem eine gleichmäßige Beschleunigung durchgeführt wird. Für den vorliegenden Fall des Überwindens eines Hindernisses ist jedoch genau dieser Effekt erwünscht.

Um den Motor entsprechend ansteuern zu können, erfasst hierzu die Steuereinheit 200 zunächst die Daten einer Umfeldsensorik 210, die zumindest den Bereich voraus, auf und/oder neben der Fahrbahn erfasst (siehe Figur 2). Diese Daten können sowohl als Rohdaten eingelesen werden, so dass die Steuereinheit 200 die Erkennung des Hindernisses selbst übernimmt oder bereits aufbereitet sein, indem die Steuereinheit 200 nur noch die Mitteilung über das Hindernis bzw. deren Dimensionen (Höhe, Breite) erhält. Die Umfeldsensorik 210 kann dabei durch eine Kamera, ein oder mehrere Ultraschallsensoren und/oder Radarsensoren realisiert sein, die wie bereits erwähnt, optional bereits eine Auswertung der erfassten Daten bereit stellen können. Zusätzlich erfasst die Steuereinheit 200 wenigstens eine Größe, die die Fahrdynamik des Fahrrads repräsentiert. Typische Größen für die Fahrdynamik können mittels geeigneter Sensoren 220 erfasst werden, z.B. eine Geschwindigkeitsgröße, eine Beschleunigungsgröße, eine Neigungsgröße, einen Lenkwinkel und/oder eine Drehrate des Fahrrads, z.B. um die Querachse und den Massenschwerpunkt. Darüber hinaus kann mit einem geeigneten Sensor 230 auch die Anstell- oder auch Aufstellwinkel des Fahrrads erfasst werden, d.h. die Verkippung des Lenkrohrs zur Vertikalen. Zusätzlich können auch Sensoren verwendet werden, die das Gewicht des Fahrrads, des Fahrers und/oder des Gepäcks erfassen. Der entsprechende Gewichtssensor 240 zur Erfassung eines dieser Gewichte kann dabei am Sattelrohr oder am Gepäckträger befestigt sein.

Ausgehend von den erfassten Daten der Umfeldsensorik und der fahrdynamischen Größe, mit der der voraussichtlich zu befahrende Weg prognostiziert werden kann, kann die Steuereinheit 200 ein Hindernis vor dem Fahrrad erkennen, welches sich auf dem Fahrweg befindet. Erkennt die Steuereinheit 200, dass durch eine Ansteuerung des Motors 250 eine Überwindung des Hindernisses durch eine Anhebung oder zumindest Unterstützung des Anhebens des Vorderrads möglich ist, so wird durch den Motor 250 ein zusätzlichen Antriebsimpuls erzeugt, z.B. indem das Antriebsmoment erhöht wird. Durch die Erfassung der Masse auf dem Fahrrad kann die Abschätzung verbessert werden, indem der Massenschwerpunkt ermittelt und bei der Ansteuerung mit berücksichtigt wird. Optional kann auch eine Bremse 260 des Zweirads angesteuert werden, um das Anheben des Vorderrads zu ermöglichen. Wird ein Hindernis erkannt, unabhängig davon, ob die Erkennung bereits in der Umfeldsensorik 210 oder in der Steuereinheit 200 erfolgt, kann über eine Warnanzeige 270 der Fahrer gewarnt werden, dass er auf das Hindernis zu fährt. Optional kann auch vorgesehen sein, dass die Warnung nur erfolgt, wenn der Motor 250 zur Erzeugung des zusätzlichen Antriebsimpulses angesteuert wird. Alternativ kann der Fahrer auch nur dann gewarnt werden, wenn die Ansteuerung NICHT durchgeführt wird, z.B. da das Hindernis nicht hoch genug ist, so dass der Fahrer ausweichen oder selber aktiv werden kann, das Hindernis zu überwinden. Generell kann die Warnung optisch auf einem Display oder akustisch erfolgen.

In dem Flussdiagramm der Figur 3 wird eine mögliche Ausgestaltung des erfindungsgemäßen Verfahrens dargestellt, wie es beispielsweise auch in der Steuereinheit 200 der Figur 2 ausgeführt werden kann. Nach dem Start des Verfahrens werden im Schritt 300 die Daten einer Umfeldsensorik erfasst. Optional können in diesem Schritt 300 auch die konkreten Erkenntnisse einer Umfeldsensorik über erkannte Hindernisse in der Umgebung des Fahrrads erfasst werden, z.B. ein Bordstein. Anschließend wird in Schritt 310 wenigstens eine fahrdynamische Größe erfasst. Zusätzlich kann im Schritt 310 auch wenigstens eine Gewichtsgröße erfasst werden, z.B. des Zweirads, des Fahrers und/oder des Gepäcks. Im Schritt 320 wird basierend auf der wenigstens einen fahrdynamischen Größe der Fahrweg des Fahrrads prognostiziert. Liegt das erkannte Hindernis, z.B. abgeleitet aus den Daten der Umfeldsensorik, auf diesem (vorausliegenden) Fahrweg so wird mit Schritt 340 eine Überprüfung der Ansteuerung des Motors zum Anheben des Vorderrads gestartet. Falls das Hindernis nicht auf dem Fahrweg liegt und es somit zu keiner Kollision kommt, wird das Verfahren beendet oder erneut mit Schritt 300 durchlaufen. Im Schritt 340 wird aus den erfassten Daten der Umfeldsensorik bzw. dem durch die Umfeldsensorik übermittelten Hindernis dessen Höhe abgeleitet. Optional kann vorgesehen sein, dass die Ansteuerung des Motors nur durchgeführt wird, wenn die Höhe des Hindernisses eine Mindesthöhe überschreitet. In diesem Fall kann der so beschriebene Schritt auch mit der Entscheidung 320 vereint werden. In Abhängigkeit von der abgeleiteten Höhe des Hindernisses und der damit erforderlichen Höhe der Anhebung des Vorderrads wird in Schritt 350 der Motor derart angesteuert, dass er vor der Kollision zum geeigneten Zeitpunkt eine Antriebsimpuls liefert, der unterhalb des Schwerpunkts ansetzt und so das Vorderrad anheben lässt. Optional kann hierbei auch eine Bremse des Fahrrads angesteuert werden, deren Bremstätigkeit die Drehung des Fahrrads um den Massenschwerpunkt bzw. dem Aufsetzpunkt unterstützt. Weiter ist optional denkbar, dass die Ermittlung des Massenschwerpunkts bzw. der Gesamtmasse aufgrund der in Schritt 310 erfassten Gewichtsgrößen ebenfalls in die Ansteuerung des Motors einfließen kann. So hängt der notwendige Impuls zur Entlastung bzw. Anhebung des Vorderrads u.a. von der Gesamtmasse des Systems bestehend aus Fahrrad, Fahrer und Gepäck sowie dem vertikalen Abstand zum Massenschwerpunkt ab. Anschließend kann das Verfahren beendet werden.

In einem weiteren Ausführungsbeispiel des Verfahrens kann optional im Schritt 330 eine Warnung an den Fahrer ausgegeben werden, bevor die Ansteuerung des Motors im Schritt 350 durchgeführt wird. Dies reduziert die Überraschung des Fahrers, dass ein nicht durch seine Tritttätigkeit hervorgerufener Vortrieb erzeugt wird.

Optional kann auch vorgesehen sein, dass die erreichte Höhe und/oder der Aufstell-/Anstellwinkel überwacht wird, in der das Fahrrad durch ein Anheben des Vorderrads gebracht wird. Wird so im Schritt 360 nach der Ansteuerung des Motors erkannt, dass die Höhe nicht ausreicht, kann erneut im Schritt 350 der Vortrieb, z.B. das erzeugte Antriebsdrehmoment des Motors erhöht werden. Alternativ kann auch erkannt werden, ob der Effekt durch den zusätzlichen horizontalen Impuls zu groß war und ein Kippen nach hinten zu befürchten ist. In diesem Fall kann die weitere Erzeugung des Antriebsmoment reduziert oder beendet werden.

## Patentansprüche

1. Verfahren zur Steuerung des Motors (250) eines wenigstens teilweise elektrisch angetriebenen Zweirads (100), wobei
• mittels der Daten einer Umfeldsensorik (210) zumindest den in Fahrtrichtung des Zweirads (100) vorausliegende Bereich erfasst wird, und
• wenigstens eine fahrdynamische Größen des Betriebs des Zweirads (100) erfasst wird, und
• ein Hindernis (110) in Abhängigkeit des erfassten Bereichs und der wenigstens einen fahrdynamischen Größe erkannt wird,
**dadurch gekennzeichnet, dass**
• in Abhängigkeit der Erkennung des Hindernisses (110) der Motor (250) derart angesteuert wird, dass der Vortrieb des Zweirads (100) erhöht wird, durch den Motor (250) derart erhöht wird, dass das Vorderrad entlastet wird, insbesondere von der Fahrbahn abhebt.

2. Verfahren nach Anspruch 1, **dadurch gekennzeichnet, dass** als fahrdynamische Größe,
• die Geschwindigkeit des Zweirads, und/oder
• die Beschleunigung des Zweirads, und/oder
• die Lenkrichtung des Zweirads, und/oder
• die Gesamtmasse des Zweirads, und/oder
• das Gewicht auf dem Sattel, und/oder
• die Masseverteilung auf dem Zweirad
erfasst wird.

3. Verfahren nach Anspruch 1 oder 2, **dadurch gekennzeichnet, dass** der Massenschwerpunkt (130) des Zweirads (100) und/oder der Massenschwerpunkt (130) des Systems bestehend aus Zweirad (100) und Fahrer berechnet und/oder ermittelt wird und der Motor zur Erhöhung des Vortriebs in Abhängigkeit von dem berechneten und/oder ermittelten Masseschwerpunkt (130) angesteuert wird.

4. Verfahren nach einem der vorherigen Ansprüche, **dadurch gekennzeichnet, dass** mittels der Umfeldsensorik die Höhe oder die Tiefe des Hindernisses (110) ermittelt wird und die Ansteuerung des Motors (250) zur Erhöhung des Vortriebs in Abhängigkeit einer erkannten Mindesthöhe des Hindernisses (110) erfolgt.

5. Verfahren nach einem der vorherigen Ansprüche, **dadurch gekennzeichnet, dass** als Hindernis (110) eine Bordsteinkante, ein Randstein, Verwerfungen der Fahrbahn, eine Vertiefung in der Fahrbahn und/oder Straßenbahnschiene erkannt wird.

6. Verfahren nach einem der vorherigen Ansprüche, **dadurch gekennzeichnet, dass** in Abhängigkeit von der wenigstens einen fahrdynamischen Größe ein Auftreffen des Vorderrads auf das Hindernis (110) berechnet wird und die Ansteuerung des Motors (250) in Abhängigkeit von diesem berechneten Auftreffen erfolgt.

7. Vorrichtung zur Steuerung des Motors (250) eines wenigstens teilweise elektrisch angetriebenen Zweirads (100), insbesondere nach einem der Verfahren in den Ansprüchen 1 bis 6, wobei die Vorrichtung eine Steuereinheit (200) aufweist, die
• mittels der Daten einer Umfeldsensorik (210) zumindest den in Fahrtrichtung des Zweirads (100) vorausliegende Bereich erfasst, und
• wenigstens eine fahrdynamische Größen des Betriebs des Zweirads (100) erfasst, und
• ein Hindernis (110) in Abhängigkeit des erfassten Bereichs und der wenigstens einen fahrdynamischen Größe erkennt,
**dadurch gekennzeichnet, dass** die Steuereinheit (200)
• in Abhängigkeit der Erkennung des Hindernisses (110) den Motor (250) derart ansteuert, dass der Vortrieb des Zweirads (110) erhöht wird, so das Vorderrad entlastet wird, insbesondere von der Fahrbahn abhebt.

8. Vorrichtung nach Anspruch 7, **dadurch gekennzeichnet, dass** die Steuereinheit (200) als fahrdynamische Größe,
• die Geschwindigkeit des Zweirads, und/oder
• die Beschleunigung des Zweirads, und/oder
• die Lenkrichtung des Zweirads, und/oder
• die Gesamtmasse des Zweirads, und/oder
• das Gewicht auf dem Sattel, und/oder
• die Masseverteilung auf dem Zweirad
erfasst.

9. Vorrichtung nach Anspruch 7 oder 8, **dadurch gekennzeichnet, dass** die Steuereinheit (200) den Massenschwerpunkt (130) des Zweirads und/oder den Massenschwerpunkt (130) des Systems bestehend aus Zweirad (100) und Fahrer berechnet und/oder ermittelt und den Motors (250) zur Erhöhung des Vortriebs in Abhängigkeit von dem berechneten und/oder ermittelten Masseschwerpunkt (130) des Zweirads (100) ansteuert.

10. Vorrichtung nach einem der Ansprüche 7 bis 9, **dadurch gekennzeichnet, dass** die Steuereinheit (200) aus den Daten der Umfeldsensorik die Höhe oder die Tiefe des Hindernisses (110) ermittelt und die Ansteuerung des Motors (250) zur Erhöhung des Vortriebs in Abhängigkeit einer erkannten Mindesthöhe des Hindernisses (110) erfolgt.

11. Vorrichtung nach einem der Ansprüche 7 bis 10, **dadurch gekennzeichnet, dass** die Steuereinheit (200) eine Warninformation erzeugt, wenn ein Hindernis (110) erkannt wird, insbesondere vor der Ansteuerung des Motors (250).

12. Vorrichtung nach einem der Ansprüche 7 bis 11, **dadurch gekennzeichnet, dass** die Steuereinheit (200) in Abhängigkeit von der wenigstens einen fahrdynamischen Größe ein Auftreffen des Vorderrads auf das Hindernis (110) berechnet und die Ansteuerung des Motors (250) in Abhängigkeit von diesem berechneten Auftreffen erfolgt.

13. Zweirad, insbesondere ein wenigstens teilweise elektrisch angetriebenes Zweirad, mit einer Steuereinheit (200) nach einem der Ansprüche 7 bis 11, wenigstens einem Sensor (220) zur Erfassung einer fahrdynamischen Größe des Zweirads (100) und einem Motor (250).

## Claims

1. Method for controlling the motor (250) of an at least partially electrically driven bicycle (100), wherein
• at least the region which is situated ahead in the direction of travel of the bicycle (100) is detected by means of the data from an environment sensor system (210), and
• at least one driving-dynamics variable of the operation of the bicycle (100) is detected, and
• an obstacle (110) is identified depending on the detected region and the at least one driving-dynamics variable,
**characterized in that**
• the motor (250) is actuated, depending on the identification of the obstacle (110), in such a way that the propulsion of the bicycle (100) is increased, is increased by the motor (250) in such a way that the front wheel is relieved of loading, in particular lifts off from the roadway.

2. Method according to Claim 1, **characterized in that**
• the speed of the bicycle, and/or
• the acceleration of the bicycle, and/or
• the steering direction of the bicycle, and/or
• the total mass of the bicycle, and/or
• the weight on the saddle, and/or
• the mass distribution on the bicycle
are/is detected as the driving-dynamics variable.

3. Method according to Claim 1 or 2, **characterized in that** the centre of mass (130) of the bicycle (100) and/or the centre of mass (130) of the system comprising the bicycle (100) and the rider is calculated and/or determined, and the motor is actuated for increasing the propulsion depending on the calculated and/or determined centre of mass (130).

4. Method according to one of the preceding claims, **characterized in that** the height or the depth of the obstacle (110) is determined by means of the environment sensor system, and the motor (250) is actuated for increasing the propulsion depending on an identified minimum height of the obstacle (110).

5. Method according to one of the preceding claims, **characterized in that** a kerb edge, a kerbstone, faults in the roadway, a pothole in the roadway and/or tram tracks is/are identified as the obstacle (110).

6. Method according to one of the preceding claims, **characterized in that**, depending on the at least one driving-dynamics variable, an impact of the front wheel against the obstacle (110) is calculated and the motor (250) is actuated depending on this calculated impact.

7. Apparatus for controlling the motor (250) of an at least partially electrically driven bicycle (100), in particular according to one of the methods in Claims 1 to 6, wherein the apparatus has a control unit (200) which
• detects at least the region which is situated ahead in the direction of travel of the bicycle (100) by means of the data from an environment sensor system (210), and
• detects at least one driving-dynamics variable of the operation of the bicycle (100), and
• identifies an obstacle (110) depending on the detected region and the at least one driving-dynamics variable,
**characterized in that** the control unit (200)
• actuates the motor (250), depending on the identification of the obstacle (110), in such a way that the propulsion of the bicycle (110) is increased, so the front wheel is relieved of loading, in particular lifts off from the roadway.

8. Apparatus according to Claim 7, **characterized in that** the control unit (200) detects
• the speed of the bicycle, and/or
• the acceleration of the bicycle, and/or
• the steering direction of the bicycle, and/or
• the total mass of the bicycle, and/or
• the weight on the saddle, and/or
• the mass distribution on the bicycle
as the driving-dynamics variable.

9. Apparatus according to Claim 7 or 8, **characterized in that** the control unit (200) calculates and/or determines the centre of mass (130) of the bicycle and/or the centre of mass (130) of the system comprising the bicycle (100) and the rider, and actuates the motor (250) for increasing the propulsion depending on the calculated and/or determined centre of mass (130) of the bicycle (100).

10. Apparatus according to one of Claims 7 to 9, **characterized in that** the control unit (200) determines the height or the depth of the obstacle (110) from the data from the environment sensor system, and the motor (250) is actuated for increasing the propulsion depending on an identified minimum height of the obstacle (110).

11. Apparatus according to one of Claims 7 to 10, **characterized in that** the control unit (200) generates an item of warning information when an obstacle (110) is identified, in particular before the motor (250) is actuated.

12. Apparatus according to one of Claims 7 to 11, **characterized in that** the control unit (200) calculates, depending on the at least one driving-dynamics variable, an impact of the front wheel against the obstacle (110) and the motor (250) is actuated depending on this calculated impact.

13. Bicycle, in particular a bicycle which is at least partially electrically driven, comprising a control unit (200) according to one of Claims 7 to 11, at least one sensor (220) for detecting a driving-dynamics variable of the bicycle (100), and a motor (250).

## Revendications

1. Procédé de commande du moteur (250) d'un deux-roues (100) à motorisation au moins partiellement électrique,
dans lequel
• au moins la zone située vers l'avant dans le sens de la marche du deux-roues (100) est détectée au moyen des données d'un système de capteurs d'environnement (210), et
• au moins une grandeur dynamique de conduite du fonctionnement du deux-roues (100) est détectée, et
• un obstacle (110) est détecté en fonction de la zone détectée et de ladite au moins une grandeur dynamique de conduite,
**caractérisé en ce que**
• le moteur (250) est commandé en fonction de la détection de l'obstacle (110) de manière à ce que la propulsion du deux-roues (100) soit augmentée, soit augmentée par le moteur (250), de telle sorte que la roue avant soit soulagée, en particulier qu'elle décolle de la chaussée.

2. Procédé selon la revendication 1, **caractérisé en ce qu'**en tant que variable dynamique de conduite, on détecte
• la vitesse du deux-roues, et/ou
• l'accélération du deux-roues, et/ou
• la direction de braquage du deux-roues, et/ou
• la masse totale du deux-roues, et/ou
• le poids sur la selle, et/ou
• la répartition de la masse sur le deux-roues.

3. Procédé selon la revendication 1 ou 2, **caractérisé en ce que** le centre de masse (130) du deux-roues (100) et/ou le centre de masse (130) du système constitué par le deux-roues (100) et le conducteur est calculé et/ou déterminé et **en ce que** le moteur est commandé de manière à augmenter la propulsion en fonction du centre de masse (130) calculé et/ou déterminé.

4. Procédé selon l'une des revendications précédentes, **caractérisé en ce que** la hauteur ou la profondeur de l'obstacle (110) est déterminée au moyen du système de capteurs d'environnement et **en ce que** la commande du moteur (250) est effectuée afin d'augmenter la propulsion en fonction d'une hauteur minimale détectée de l'obstacle (110).

5. Procédé selon l'une des revendications précédentes, **caractérisé en ce qu'**une arête de trottoir, une bordure de trottoir, des déformations de la chaussée, un creux dans la chaussée et/ou un rail de tramway sont détectés en tant qu'obstacle (110).

6. Procédé selon l'une des revendications précédentes, **caractérisé en ce qu'**un impact de la roue avant sur l'obstacle (110) est calculé en fonction de ladite au moins une grandeur dynamique de conduite, et **en ce que** la commande du moteur (250) est effectuée en fonction dudit impact calculé.

7. Dispositif de commande du moteur (250) d'un deux-roues (100) à motorisation au moins partiellement électrique, en particulier selon l'un des procédés des revendications 1 à 6, dans lequel le dispositif comporte une unité de commande (200) qui
• détecte au moins la zone située vers l'avant dans le sens de la marche du deux-roues (100) au moyen des données d'un système de capteurs d'environnement (210), et
• détecte au moins une grandeur dynamique de conduite du fonctionnement du deux-roues (100), et
• détecte un obstacle (110) en fonction de la zone détectée et de ladite au moins une grandeur dynamique de conduite,
**caractérisé en ce que** l'unité de commande (200)
• commande le moteur (250) en fonction de la détection de l'obstacle (110) de manière à ce que la propulsion du deux-roues (110) soit augmentée de telle sorte que la roue avant soit soulagée, en particulier qu'elle décolle de la chaussée.

8. Dispositif selon la revendication 7, **caractérisé en ce que** l'unité de commande (200) détecte en tant que grandeur dynamique de conduite
• la vitesse du deux-roues, et/ou
• l'accélération du deux-roues, et/ou
• la direction de braquage du deux-roues, et/ou
• la masse totale du deux-roues, et/ou
• le poids sur la selle, et/ou
• la répartition de la masse sur le deux-roues.

9. Dispositif selon la revendication 7 ou 8, **caractérisé en ce que** l'unité de commande (200) calcule et/ou détermine le centre de masse (130) du deux-roues et/ou le centre de masse (130) du système constitué par le deux-roues (100) et le conducteur et commande le moteur (250) de manière à augmenter la propulsion en fonction du centre de masse (130) du deux-roues (100) calculé et/ou déterminé.

10. Dispositif selon l'une des revendications 7 à 9, **caractérisé en ce que** l'unité de commande (200) détermine la hauteur ou la profondeur de l'obstacle (110) à partir des données du système de capteurs d'environnement et **en ce que** la commande du moteur (250) est effectuée de manière à augmenter la propulsion en fonction d'une hauteur minimale détectée de l'obstacle (110).

11. Dispositif selon l'une des revendications 7 à 10, **caractérisé en ce que** l'unité de commande (200) génère des informations d'avertissement lorsqu'un obstacle (110) est détecté, en particulier avant que le moteur (250) soit commandé.

12. Dispositif selon l'une des revendications 7 à 11, **caractérisé en ce que** l'unité de commande (200) calcule un impact de la roue avant sur l'obstacle (110) en fonction de ladite au moins une grandeur dynamique de conduite, et **en ce que** la commande du moteur (250) est effectuée en fonction dudit impact calculé.

13. Deux-roues, en particulier deux-roues à motorisation au moins partiellement électrique, comportant une unité de commande (200) selon l'une des revendications 7 à 11, au moins un capteur (220) pour détecter une grandeur dynamique de conduite du deux-roues (100), et un moteur (250).
